# EUROPÄISCHE PATENTANMELDUNG

(11) **EP 4 641 081 A1**
(43) Veröffentlichungstag der Anmeldung: **29.10.2025**
(21) Anmeldenummer: 25171555.3
(22) Anmeldetag: 22.04.2025
(51) Int. Cl.: F21V 23/04

(54) **AUFBAULEUCHTE**

(30) Priorität: 23.04.2024 DE 202024102028 U
(71) Anmelder: Briloner Leuchten GmbH & Co. KG, 59872 Meschede (DE)
(72) Erfinder: HUSTADT, Wolf Walter, 59755 Arnsberg (DE)
(74) Vertreter: Schäperklaus, Jochen

(57) **Zusammenfassung**

Die vorliegende Erfindung betrifft eine Aufbauleuchte (1), umfassend
- ein Gehäuse (2),
- eine Leuchteinrichtung (3) mit einer Mehrzahl von Leuchtmitteln, insbesondere LED-Leuchtmitteln (31), die innerhalb des Gehäuses (2) untergebracht sind,
- einen Diffusor (7), der so angeordnet ist, dass er eine Lichtaustrittsfläche des Gehäuses (2) bildet,
- eine Steuerungseinrichtung (4), die dazu ausgebildet ist, den Betrieb der Leuchteinrichtung (3) zu steuern, sowie
- ein Bewegungssensormittel (5), das innerhalb des Gehäuses (2) untergebracht ist und dazu eingerichtet ist, Mikrowellenstrahlen zu senden und zu empfangen und Bewegungen in einem zu überwachenden Bereich zu erfassen,

wobei die Steuerungseinrichtung (4) dazu ausgebildet ist, nach der Erfassung einer Bewegung die Leuchteinrichtung (3) für einen vordefinierten oder vordefinierbaren Zeitraum zu aktivieren,
wobei die Aufbauleuchte (1) einen Abschirmkörper (6) aufweist, der so ausgebildet ist und innerhalb des Gehäuses (2) so angeordnet ist, dass er sich um das Bewegungssensormittel (5) herum erstreckt und dieses seitlich einfasst.

## Beschreibung

Die vorliegende Erfindung betrifft eine Aufbauleuchte, umfassend ein Gehäuse, eine Leuchteinrichtung mit einer Mehrzahl von Leuchtmitteln, insbesondere LED-Leuchtmitteln, die innerhalb des Gehäuses untergebracht sind, einen Diffusor, der so angeordnet ist, dass er eine Lichtaustrittsfläche des Gehäuses bildet, eine Steuerungseinrichtung, die dazu ausgebildet ist, den Betrieb der Leuchteinrichtung zu steuern, sowie ein Bewegungssensormittel, das innerhalb des Gehäuses untergebracht ist und dazu eingerichtet ist, Mikrowellenstrahlen zu senden und zu empfangen und Bewegungen in einem zu überwachenden Bereich zu erfassen, wobei die Steuerungseinrichtung dazu ausgebildet ist, nach der Erfassung einer Bewegung die Leuchteinrichtung für einen vordefinierten oder vordefinierbaren Zeitraum zu aktivieren.

Aufbauleuchten, die an einer Montagefläche einer Wand oder Decke im Innen- oder Außenbereich von Gebäuden montiert werden können, sind aus dem Stand der Technik in einer Vielzahl unterschiedlicher Ausführungsformen bekannt.

Um eine bedarfsgerechte Lichtsteuerung zu ermöglichen und dadurch insbesondere Energie einzusparen, sind Aufbauleuchten häufig mit einem Bewegungssensormittel ausgestattet. Die Lichtsteuerung erfolgt dann in der Weise, dass die Leuchteinrichtung der Aufbauleuchte nur dann aktiviert wird, wenn mittels des Bewegungssensormittels in dessen Sensorumgebung eine Bewegung erfasst wird. Das Bewegungssensormittel basiert häufig auf einer Mikrowellentechnik und umfasst ein kombiniertes Sender- und Empfängermittel zum Aussenden von Mikrowellenstrahlen und zum Empfangen von Mikrowellenstrahlen, die zum Beispiel an einer sich in der Sensorumgebung bewegenden Person reflektiert werden. Die Mikrowellen durchdringen den Raum und reagieren so auf die Bewegung von lebenden Objekten und anderen Gegenständen im Erfassungsbereich. Das grundlegende Messprinzip eines derartigen Bewegungssensormittels basiert auf dem Doppler-Effekt, ähnlich wie bei einem Radar. Die Mikrowellenstrahlen, die von dem Bewegungssensormittel emittiert werden, durchdringen jede Art von Kunststoff und auch andere nicht-metallische Werkstoffe, wie zum Beispiel Holz oder Beton. Demgegenüber können Mikrowellenstrahlen metallische Werkstoffe nicht durchdringen, da sie aufgrund der elektrischen Leitfähigkeit von Metallen reflektiert werden.

Die Mikrowellenstrahlen sollten möglichst nach vorne gerichtet in den gewünschten Erfassungsbereich des Bewegungssensormittels emittiert werden. Im Stand der Technik werden Bewegungssensormittel auf Mikrowellenbasis in Aufbauleuchten häufig auf metallischen Montageflächen montiert, um eine Ausbreitung der Mikrowellenstrahlen in Richtung der Montagefläche der Aufbauleuchte an einer Wand oder Decke zumindest weitestgehend zu verhindern. Zudem wird die gesamte Sensortechnik eines Bewegungssensormittels auf Mikrowellenbasis in der Regel in einem kompletten Sensorgehäuse verbaut, woraus eine verhältnismäßig große Aufbauhöhe des Bewegungssensormittels resultiert, die eine kompakte Bauform der Aufbauleuchte mit einer entsprechend geringen Aufbauhöhe verhindert. Zudem stellt die gewünschte seitliche Abschirmung der Mikrowellenstrahlen insbesondere bei Aufbauleuchten, deren Gehäuse teilweise oder vollständig aus einem nicht-metallischen Werkstoff, insbesondere aus Kunststoff, hergestellt ist, ein Problem dar.

Die Aufgabe der Erfindung besteht darin, eine Aufbauleuchte der eingangs genannten Art zur Verfügung zu stellen, welche mit einfachen Mitteln eine wirksame seitliche Abschirmung der Mikrowellenstrahlung ermöglicht.

Die Lösung dieser Aufgabe liefert eine gattungsgemäße Aufbauleuchte mit den Merkmalen des kennzeichnenden Teils des Anspruchs 1. Die Unteransprüche betreffen vorteilhafte Weiterbildungen der Erfindung.

Eine erfindungsgemäße Aufbauleuchte zeichnet sich dadurch aus, dass die Aufbauleuchte einen Abschirmkörper aufweist, der so ausgebildet ist und innerhalb des Gehäuses so angeordnet ist, dass er sich um das Bewegungssensormittel herum erstreckt und dieses seitlich einfasst. Es kann vorgesehen sein, dass der Abschirmkörper vollständig aus Metall hergestellt ist. Durch diese seitliche Einfassung des Bewegungssensormittels mit dem Abschirmkörper aus Metall, der somit elektrisch leitfähig ist, wird in vorteilhafter Weise eine seitliche Abschirmung der von dem Bewegungssensormittel emittierten Mikrowellenstrahlung erreicht. Diese wirksame seitliche Abschirmung ermöglicht es insbesondere, das Gehäuse der Aufbauleuchte aus einem nicht-metallischen Werkstoff, wie zum Beispiel Kunststoff, herzustellen.

In einer Ausführungsform besteht die Möglichkeit, dass der Abschirmkörper aus Aluminium, Kupfer oder Stahlblech hergestellt ist.

Um die Abschirmwirkung weiter zu verbessern, kann in einer Ausführungsform vorgesehen sein, dass der Abschirmkörper eine Innenwand aufweist, die mit einer Metallfolie ausgekleidet ist. Dabei kann die Innenwand vollständig oder alternativ auch nur abschnittsweise mit der Metallfolie ausgekleidet sein. Vorzugsweise kann die Metallfolie eine Aluminiumfolie oder eine Kupferfolie sein.

Es besteht die Möglichkeit, dass der Abschirmkörper aus einem nicht-metallischen Werkstoff hergestellt ist und wobei der Abschirmkörper eine Innenwand aufweist, die vollständig mit einer Metallfolie ausgekleidet ist oder eine vollständige Metallbeschichtung aufweist. Durch diese seitliche Einfassung des Bewegungssensormittels mit dem Abschirmkörper, der zwar selbst nicht aus Metall hergestellt ist, aber eine Innenwand aufweist, die vollständig mit einer elektrisch leitfähigen Metallfolie ausgekleidet ist oder eine vollständige Metallbeschichtung, die ebenfalls elektrisch leitfähig ist, aufweist, wird in vorteilhafter Weise ebenfalls eine seitliche Abschirmung der von dem Bewegungssensormittel emittierten Mikrowellenstrahlung erreicht. Dieses ermöglicht es insbesondere, das Gehäuse der Aufbauleuchte aus einem nicht-metallischen Werkstoff, wie zum Beispiel Kunststoff, herzustellen.

Vorzugsweise kann der Abschirmkörper aus Kunststoff hergestellt sein.

Vorzugsweise kann die Metallfolie eine Aluminiumfolie oder eine Kupferfolie sein.

Vorzugsweise kann die Metallbeschichtung eine Aluminiumbeschichtung oder eine Kupferbeschichtung sein.

In einer Ausführungsform wird vorgeschlagen, dass die Metallfolie oder die Metallbeschichtung eine Dicke von mindestens 0,03 mm aufweist. Dadurch kann eine wirksame Abschirmung der Mikrowellenstrahlung sichergestellt werden.

In einer Ausführungsform ist vorgesehen, dass der Abschirmkörper hohlzylindrisch ausgebildet ist.

In einer alternativen Ausführungsform besteht die Möglichkeit, dass der Abschirmkörper als gerades Hohlprisma mit einem regelmäßigen Vieleck als Grundfläche ausgebildet ist.

In einer besonders vorteilhaften Ausführungsform wird vorgeschlagen, dass an einer Rückseite des Gehäuses, die nach der Montage der Aufbauleuchte einer Montagefläche zugewandt ist, eine Abschirmfolie aus Metall derart angeordnet und so geformt ist, dass sie Mikrowellenstrahlen, die so gerichtet sind, dass sie durch die Rückseite des Gehäuses transmittiert werden können, abschirmt. Da die Abschirmfolie aus Metall hergestellt ist und somit ebenfalls elektrisch leitfähig ist, wird in vorteilhafter Weise auch eine rückseitige Abschirmung der von dem Bewegungssensormittel emittierten Mikrowellenstrahlung erreicht, so dass diese auf der Rückseite des Gehäuses nicht nach außen in die Umgebung transmittiert werden.

Vorzugsweise kann die Abschirmfolie aus Aluminium oder Kupfer hergestellt sein.

Um eine sichere Abschirmwirkung zu erhalten, ist in einer bevorzugten Ausführungsform vorgesehen, dass die Abschirmfolie eine Dicke von mindestens 0,03 mm aufweist.

Um eine möglichst kompakte Bauweise der Aufbauleuchte zu ermöglichen, weist der Abschirmkörper vorzugsweise eine Aufbauhöhe auf, die maximal etwa 15 mm beträgt.

Der Umriss des Gehäuses kann zum Beispiel kreisförmig, oval, quadratisch oder rechteckig sein. Da das hier vorgestellte Abschirmkonzept für die Mikrowellenstrahlen vollkommen unabhängig von der Gehäuseform ist, sind beliebige Gehäuseformen möglich.

Weitere Merkmale und Vorteile von Ausführungsbeispielen der Erfindung werden unter Bezugnahme auf die Zeichnungen nachfolgend beschrieben. Es zeigen:
- Fig. 1: eine Explosionsansicht einer Aufbauleuchte, die gemäß einem ersten Ausführungsbeispiel der Erfindung ausgeführt ist,
- Fig. 2: eine Seitenansicht der Aufbauleuchte im montierten Zustand,
- Fig. 3: eine perspektivische Ansicht, die das Innere eines ersten Gehäuseteils eines Gehäuses der Aufbauleuchte zeigt.

Es ist nicht notwendig, dass eine erfindungsgemäße Aufbauleuchte 1 alle nachfolgend beschriebenen Merkmale aufweist. Es ist auch möglich, dass eine erfindungsgemäße Aufbauleuchte 1 nur einzelne Merkmale der nachfolgend beschriebenen Ausführungsbeispiele aufweist.

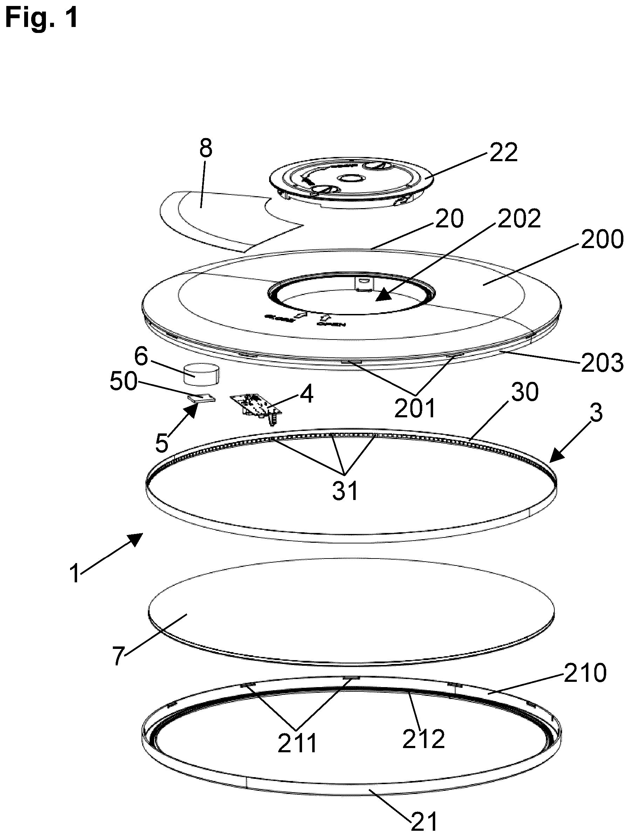

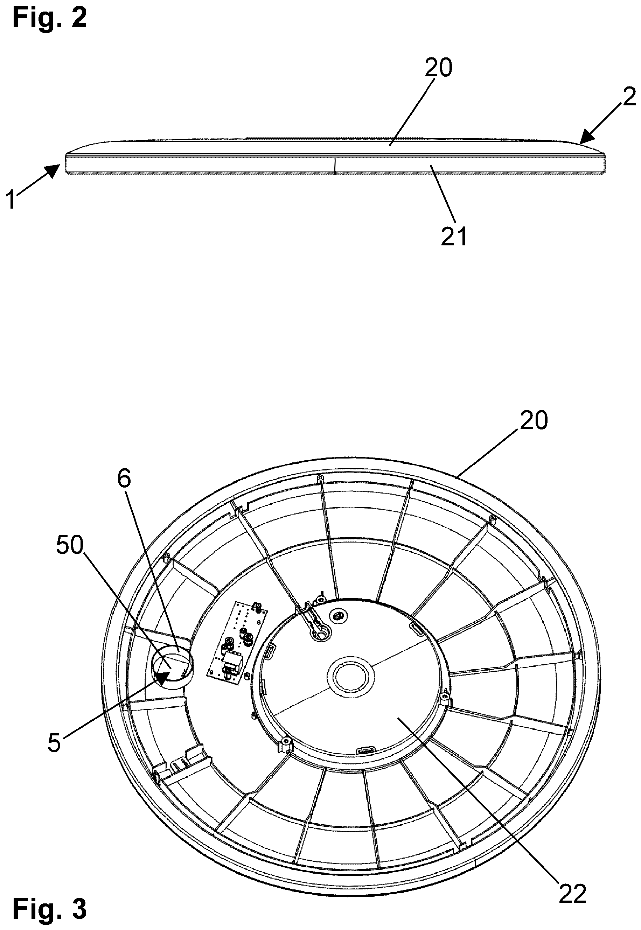

Unter Bezugnahme auf Fig. 1 bis 3 soll nachfolgend ein Ausführungsbeispiel einer Aufbauleuchte 1 näher erläutert werden. Die Aufbauleuchte 1 besitzt in diesem Ausführungsbeispiel einen kreisförmigen Umriss und umfasst ein Gehäuse 2 aus Kunststoff mit einem ersten Gehäuseteil 20 und mit einem zweiten Gehäuseteil 21, das an dem ersten Gehäuseteil 20 befestigt ist. In dem hier gezeigten Ausführungsbeispiel weist das erste Gehäuseteil 20 an seiner Außenwand 203 in Umfangsrichtung verteilt mehrere Rastmittel 201 auf. Das zweite Gehäuseteil 21 weist an seiner Innenwand 210 in Umfangsrichtung verteilt ebenfalls mehrere Rastmittel 211 auf, die mit den Rastmitteln 201 des ersten Gehäuseteils 20 korrespondieren, so dass bei der Montage eine Rastverbindung zwischen dem ersten Gehäuseteil 20 und dem zweiten Gehäuseteil 21 hergestellt werden kann. Es soll an dieser Stelle ausdrücklich darauf hingewiesen werden, dass die hier vorgesehene Rastverbindung nur beispielhaft zu verstehen ist und somit auch andere formschlüssige und/oder kraftschlüssige Verbindungen (zum Beispiel Verschraubungen) oder auch stoffschlüssige Verbindungen (insbesondere Verklebungen) möglich sind, um das erste Gehäuseteil 20 mit dem zweiten Gehäuseteil 21 zu verbinden.

Wie in Fig. 1 zu erkennen, umfasst das Gehäuse 2 einen Gehäuseverschluss 22, mittels dessen eine zentrale Öffnung 202, die an einer Oberseite 200 des ersten Gehäuseteils 20 ausgebildet ist und mittels derer das Innere des Gehäuses 2 zugänglich ist, verschließbar ist. Vorzugsweise kann der zugehörige Verschlussmechanismus als Bajonettverschluss, Rastverschluss oder Schraubverschluss ausgebildet sein.

Ferner umfasst die Aufbauleuchte 1 eine Leuchteinrichtung 3, die innerhalb des Gehäuses 2 untergebracht ist und vorliegend durch ein Leuchtdiodenband 30 mit einer Mehrzahl von LED-Leuchtmitteln 31 gebildet ist. Das Leuchtdiodenband 30 ist vorliegend zu einem geschlossenen Ring geformt und wird bei der Montage an der Innenwand 210 des zweiten Gehäuseteils 21 befestigt, insbesondere mit der Innenwand 210 verklebt. Während des Betriebs können die LED-Leuchtmittel 31 Licht in einer radial einwärts gerichteten Hauptausbreitungsrichtung emittieren. Die Aufbauleuchte 1 umfasst darüber hinaus einen Diffusor 7, der auf einem ringförmigen Auflageflansch 212 des ersten Gehäuseteils 21 aufliegt. Der Diffusor 7, der vorzugsweise aus Kunststoff hergestellt ist, bildet nach der Montage der Aufbauleuchte 1 einen raumseitigen Abschluss des Gehäuses 2 und ist dazu ausgebildet, das während des Betriebs der Leuchteinrichtung 3 von den LED-Leuchtmitteln 31 emittierte Licht derart zu streuen, dass es aus dem Gehäuse 2 in die Umgebung austritt und hierbei eine möglichst gleichmäßige Lichtverteilung erzeugt.

Darüber hinaus verfügt die Aufbauleuchte 1 über eine Steuerungseinrichtung 4, die dazu ausgebildet ist, den Betrieb der Leuchteinrichtung 3 zu steuern, sowie ein Bewegungssensormittel 5. Das Bewegungssensormittel 5 wird aktiv betrieben und umfasst ein kombiniertes Sender- und Empfängermittel 50, welches für das Senden und Empfangen von Mikrowellenstrahlen ausgebildet ist, um Bewegungen in der Nähe der Aufbauleuchte 1 zu erfassen. Die Mikrowellen durchdringen den Raum in der Umgebung der Aufbauleuchte 1 und "reagieren" auf Bewegungen von lebenden Objekten und anderen Gegenständen im Erfassungsbereich, indem sie von diesen reflektiert werden. Diese reflektierten Mikrowellenstrahlen können dann von dem kombinierten Sender- und Empfängermittel 50 des Bewegungssensormittels 5 erfasst werden. Das grundlegende Messprinzip des Bewegungssensormittels 5 basiert auf dem Doppler-Effekt, ähnlich wie bei einem Radar. Die Mikrowellenstrahlen, die von dem kombinierten Sender- und Empfängermittel 50 des Bewegungssensormittels 5 emittiert werden, durchdringen jede Art von Kunststoff und auch andere nicht-metallische Werkstoffe. Demgegenüber können Mikrowellenstrahlen metallische Werkstoffe nicht durchdringen, da sie aufgrund der elektrischen Leitfähigkeit von Metallen reflektiert werden.

Die Steuerungseinrichtung 4 ist dazu ausgebildet, nach der Erfassung einer Bewegung in der Nähe der Aufbauleuchte 1 durch das Bewegungssensormittel 5 die LED-Leuchtmittel 31 der Leuchteinrichtung 3 zu aktivieren und nach einem vordefinierten oder nach einem vordefinierbaren Zeitraum, innerhalb dessen von dem Bewegungssensormittel 5 keine Bewegung mehr erfasst wurde, automatisch wieder zu deaktivieren.

Die von dem kombinierten Sender- und Empfängermittel 50 des Bewegungssensormittels 5 emittierten Mikrowellenstrahlen sollten möglichst nach vorne gerichtet in den gewünschten Erfassungsbereich des Bewegungssensormittels 5 in der Umgebung der Aufbauleuchte 1 emittiert werden. Bislang stellten insbesondere die seitliche Abschirmung der Mikrowellenstrahlen sowie die Abschirmung nach hinten bei einer Wandmontage beziehungsweise nach oben bei einer Deckenmontage in Richtung der Montagefläche bei Aufbauleuchten 1, deren Gehäuse 2 aus einem nicht-metallischen Werkstoff, insbesondere aus Kunststoff, hergestellt ist, häufige Probleme dar.

Bei der hier vorgestellten Aufbauleuchte 1 ist daher ein Abschirmkörper 6 vorgesehen, der so geformt ist, dass er sich in Umfangsrichtung vollständig um das Bewegungssensormittel 5 herum erstreckt. Der Abschirmkörper 6 ist in diesem Ausführungsbeispiel hohlzylindrisch ausgebildet. Der Abschirmkörper 6 kann vorzugsweise vollständig aus Metall hergestellt sein. Wie oben bereits erwähnt, gehören Metalle zu denjenigen Materialien, welche Mikrowellen nicht durchdringen können, so dass die Mikrowellenstrahlen im Inneren des Abschirmkörpers 6 reflektiert werden, so dass eine seitliche Abschirmung erhalten wird. Die Ursache der Reflexion von Mikrowellen an Metallen resultiert aus der elektrischen Leitfähigkeit dieser Werkstoffe. Beispielsweise kann der Abschirmkörper 6 aus Aluminium, Kupfer oder Stahlblech hergestellt sein.

Grundsätzlich ist es auch denkbar, den Abschirmkörper 6 vollständig aus Metall herzustellen und zusätzlich auf seiner Innenwand eine Beschichtung aus Metall, insbesondere aus Kupfer oder Aluminium, oder eine innenliegende Metallfolie, insbesondere eine Aluminiumfolie oder Kupferfolie, vorzusehen. Dadurch kann ein nahezu vollständiger Strahlverlust gewährleistet werden.

In einer alternativen Ausführungsform besteht die Möglichkeit, dass der Abschirmkörper 6 selbst aus einem elektrisch nicht leitfähigen Werkstoff, wie zum Beispiel Kunststoff, hergestellt ist, aber auf seiner Innenwand eine vollständige Beschichtung aus Metall oder eine innenliegende Metallfolie, die an der Innenwand befestigt ist und mit der die Innenwand vollständig ausgekleidet ist, aufweist. Die innere Beschichtung des Abschirmkörpers 6 beziehungsweise die innenliegende Metallfolie kann zum Beispiel aus Kupfer oder aus Aluminium hergestellt sein. Vorzugsweise weist die innere Beschichtung beziehungsweise die innenliegende Metallfolie des Abschirmkörpers 6 eine Dicke von mindestens 0,03 mm auf, um eine sichere Abschirmung der Mikrowellenstrahlung zu gewährleisten.

Um eine möglichst kompakte Bauweise der Aufbauleuchte 1 zu ermöglichen, weist der Abschirmkörper 6 vorzugsweise eine Aufbauhöhe auf, die maximal etwa 15 mm beträgt.

Der in der vorstehend beschriebenen Weise ausgebildete Abschirmkörper 6 ermöglicht es, die Mikrowellenstrahlen, die vom Bewegungssensormittel 5 emittiert werden, seitlich abzuschirmen und in Richtung des Raums zu lenken, welcher überwacht werden soll.

Die Mikrowellenstrahlen, die in Richtung des Überwachungsbereichs des zu überwachenden Raums von dem Bewegungssensormittel 5 emittiert werden, werden weitestgehend durch den aus Kunststoff hergestellten Diffusor 7 transmittiert. Es ist aber möglich, dass ein Teil der Mikrowellenstrahlen derart reflektiert wird, dass sie aus der Rückseite 200 des Gehäuses 2 der Aufbauleuchte 1 austreten. Da die Mikrowellenstrahlen durch alle nicht elektrisch leitfähigen Materialien transmittiert werden, ist es zum Beispiel möglich, dass sie auch eine Betondecke oder eine Wand, an der die Aufbauleuchte 1 montiert ist, durchdringen können. Um zu vermeiden, dass von dem Bewegungssensormittel 5 auch Bewegungen oberhalb oder hinter der Aufbauleuchte 1 erfasst werden, ist an einer Rückseite 200 des ersten Gehäuseteils 20 abschnittsweise in einem Bereich, welcher das Bewegungssensormittel 5 überdeckt, eine Abschirmfolie 8 aus einem metallischen Werkstoff, insbesondere eine Aluminiumfolie oder Kupferfolie, angebracht. Die Abschirmfolie 8 ist in diesem Ausführungsbeispiel aufgrund der kreisrunden Grundform des Gehäuses 2 als teilringförmiger Folienzuschnitt ausgebildet.

Da das durch die Abschirmfolie 8 geschaffene Abschirmkonzept unabhängig von der Grundform des Gehäuses 2 der Aufbauleuchte 1 ist, kann die geometrische Gestaltung sehr einfach an unterschiedliche Grundformen angepasst werden. Beispielsweise kann bei einer Aufbauleuchte 1 mit einer rechteckigen oder quadratischen Grundform des Gehäuses 2 eine winkelförmige oder L-förmige Ausgestaltung der Abschirmfolie 8 mit jeweils zwei zueinander orthogonalen Schenkeln gewählt werden.

Auf die konkrete geometrische Formgestaltung der Abschirmfolie 8 kommt es letztlich aber nicht an. Wichtig ist in erster Linie die Größe der Fläche der Abschirmfolie 8, die das Bewegungssensormittel 5 auf der Rückseite 200 des ersten Gehäuseteils 20 überdeckt und dadurch die wirksame Abschirmung des Bewegungssensormittels 5 an der zur Montagefläche gewandten Rückseite 200 des ersten Gehäuseteils 20 (und damit des Gehäuses 2) der Aufbauleuchte 1 bewirkt.

## Patentansprüche

1. Aufbauleuchte (1), umfassend
- ein Gehäuse (2),
- eine Leuchteinrichtung (3) mit einer Mehrzahl von Leuchtmitteln, insbesondere LED-Leuchtmitteln (31), die innerhalb des Gehäuses (2) untergebracht sind,
- einen Diffusor (7), der so angeordnet ist, dass er eine Lichtaustrittsfläche des Gehäuses (2) bildet,
- eine Steuerungseinrichtung (4), die dazu ausgebildet ist, den Betrieb der Leuchteinrichtung (3) zu steuern, sowie
- ein Bewegungssensormittel (5), das innerhalb des Gehäuses (2) untergebracht ist und dazu eingerichtet ist, Mikrowellenstrahlen zu senden und zu empfangen und Bewegungen in einem zu überwachenden Bereich zu erfassen, wobei die Steuerungseinrichtung (4) dazu ausgebildet ist, nach der Erfassung einer Bewegung die Leuchteinrichtung (3) für einen vordefinierten oder vordefinierbaren Zeitraum zu aktivieren,
**dadurch gekennzeichnet, dass** die Aufbauleuchte (1) einen Abschirmkörper (6) aufweist, der so ausgebildet ist und innerhalb des Gehäuses (2) so angeordnet ist, dass er sich um das Bewegungssensormittel (5) herum erstreckt und dieses seitlich einfasst.

2. Aufbauleuchte (1) nach Anspruch 1, **dadurch gekennzeichnet, dass** der Abschirmkörper (6) vollständig aus Metall, vorzugsweise aus Aluminium, Kupfer oder Stahlblech hergestellt ist.

3. Aufbauleuchte (1) nach einem der Ansprüche 1 oder 2, **dadurch gekennzeichnet, dass** der Abschirmkörper (6) eine Innenwand aufweist, die mit einer Metallfolie ausgekleidet ist.

4. Aufbauleuchte (1) nach Anspruch 3, **dadurch gekennzeichnet, dass** die Metallfolie eine Aluminiumfolie oder eine Kupferfolie ist.

5. Aufbauleuchte (1) nach Anspruch 1, **dadurch gekennzeichnet, dass** der Abschirmkörper (6) aus einem nicht-metallischen Werkstoff hergestellt ist und wobei der Abschirmkörper (6) eine Innenwand aufweist, die vollständig mit einer Metallfolie ausgekleidet ist oder eine vollständige Metallbeschichtung aufweist.

6. Aufbauleuchte (1) nach Anspruch 5, **dadurch gekennzeichnet, dass** der Abschirmkörper (6) aus Kunststoff hergestellt ist.

7. Aufbauleuchte (1) nach einem der Ansprüche 5 oder 6, **dadurch gekennzeichnet, dass** die Metallfolie eine Aluminiumfolie oder eine Kupferfolie ist.

8. Aufbauleuchte (1) nach einem der Ansprüche 5 oder 6, **dadurch gekennzeichnet, dass** die Metallbeschichtung eine Aluminiumbeschichtung oder eine Kupferbeschichtung ist.

9. Aufbauleuchte (1) nach einem der Ansprüche 5 bis 8, **dadurch gekennzeichnet, dass** die Metallfolie oder die Metallbeschichtung eine Dicke von mindestens 0,03 mm aufweist.

10. Aufbauleuchte (1) nach einem der Ansprüche 1 bis 9, **dadurch gekennzeichnet, dass** der Abschirmkörper (6) hohlzylindrisch ausgebildet ist.

11. Aufbauleuchte (1) nach einem der Ansprüche 1 bis 9, **dadurch gekennzeichnet, dass** der Abschirmkörper (6) als gerades Hohlprisma mit einem regelmäßigen Vieleck als Grundfläche ausgebildet ist.

12. Aufbauleuchte (1) nach einem der Ansprüche 1 bis 11, **dadurch gekennzeichnet, dass** an einer Rückseite (200) des Gehäuses (2), die nach der Montage der Aufbauleuchte (1) einer Montagefläche zugewandt ist, eine Abschirmfolie (8) aus Metall derart angeordnet und so geformt ist, dass sie Mikrowellenstrahlen, die so gerichtet sind, dass sie durch die Rückseite (200) des Gehäuses (2) transmittiert werden können, abschirmt.

13. Aufbauleuchte (1) nach Anspruch 12, **dadurch gekennzeichnet, dass** die Abschirmfolie (8) aus Aluminium oder Kupfer hergestellt ist.

14. Aufbauleuchte (1) nach einem der Ansprüche 12 oder 13,
**dadurch gekennzeichnet, dass** die Abschirmfolie (8) eine Dicke von mindestens 0,03 mm aufweist.

15. Aufbauleuchte (1) nach einem der Ansprüche 1 bis 14, **dadurch gekennzeichnet, dass** der Abschirmkörper (6) eine Aufbauhöhe aufweist, die maximal etwa 15 mm beträgt.
